# EUROPEAN PATENT SPECIFICATION

(11) **EP 4 345 664 B1**
(45) Date of publication and mention of the grant of the patent: **25.11.2026**
(21) Application number: 22867491.7
(22) Date of filing: 03.05.2022
(51) Int. Cl.: G06F 21/53, G06F 21/60, G06F 21/62, G06F 21/45, G06F 21/32, G06F 9/455

(54) **ELECTRONIC DEVICE FOR PROTECTING BIO-INFORMATION OF USER**
ELEKTRONISCHE VORRICHTUNG ZUM SCHUTZ VON BIOINFORMATIONEN EINES BENUTZERS
DISPOSITIF ÉLECTRONIQUE PERMETTANT DE PROTÉGER DES INFORMATIONS BIOLOGIQUES D'UN UTILISATEUR

(30) Priority: 07.09.2021 KR 20210118965
(43) Date of publication of application: 03.04.2024
(73) Proprietor: Samsung Electronics Co., Ltd., Suwon-si, Gyeonggi-do 16677 (KR)
(72) Inventor: CHANG, Moonsoo, Suwon-si, Gyeonggi-do 16677 (KR)
(74) Representative: Gulde & Partner
(86) International application number: PCT/KR2022/006371
(87) International publication number: WO 2023/038222

(56) References cited:
- JP-B1- 5 776 023
- KR-A- 20160 071 711
- US-A1- 2012 054 741
- US-A1- 2016 180 078
- US-A1- 2016 180 078
- US-B1- 10 574 689
- US-B1- 10 574 689

## Description

### [Technical Field]

The disclosure relates to a technology for protecting a user's biometric information used for a user authentication in an electronic device.

### [Background Art]

An electronic device may acquire a user's biometric information from a sensor (for example, a fingerprint sensor or an image sensor) and perform online commercial transaction, financial transaction, or a user authentication for verifying user's identity on the basis of the acquired biometric information. The electronic device may protect the user's biometric information from hacking. For example, the electronic device may assign a right to read the acquired biometric information to an application for the user authentication and block access to the biometric information by other applications which are irrelevant to the user authentication.

The above information is presented as background information only to assist with an understanding of the disclosure. No determination has been made, and no assertion is made, as to whether any of the above might be applicable as prior art with regard to the disclosure.

US 10,574,689 A1 discloses a method for mitigating intrusions to a mobile operating system (OS) that begins with the instantiation of secure services and corresponding data in secure service partitions by a secure multivisor running on a mobile device running a secure real-time operating system (RTOS). One of the secure services can be a biometric security service having corresponding biometric data defining a user's identity. The secure multivisor can instantiate a user space partition running a virtual machine with a guest OS having installed client software applications. When the virtual machine, a client software application, or a user requests interaction with the secure RTOS that meets a predefined privilege threshold, the biometric security service can determine the biometric identity of the user. When the determined biometric identity of the user matches a required biometric identity of the interaction, the biometric security service can allow the interaction with the secure RTOS.

US 2016/180078 A1 discloses technologies for information security including a computing device with one or more sensors. The computing device authenticates a user and, after successful authentication, analyzes sensor data to determine whether it is likely that the user authenticated under duress. If so, the computing device performs a security operation such as generating an alert or presenting false but plausible data to the user. Additionally or alternatively, the computing device, within a trusted execution environment, monitors sensor data and applies a machine-learning classifier to the sensor data to identify an elevated risk of malicious attack.

### [Disclosure of Invention]

### [Technical Problem]

Hardware (for example, a processor and a memory) of an electronic device may be divided into a secure area and a general area (or a non-secure area). In the secure area, a trusted execution environment (TEE) may be provided. In the general area, a general execution environment (rich execution environment) (or a non-trusted execution environment (non-TEE)) may be provided. The TEE (for example, TrustZone between arms) of the electronic device may safely protect biometric information from the general execution environment by controlling access of an application executed in the general execution environment to the biometric information. However, since the TEE is restrictively involved in protection of biometric information only in a part allocated as the secure area rather than whole the hardware, the given performance of the hardware may not be optimized for the user authentication. Particularly, as the user authentication using biometric information has advanced, an amount of data which should be processed becomes larger and a processing scheme may become complex. Accordingly, it is required to show greater performance of hardware in order to perform the user authentication.

A virtual machine (VM) may provide a computing environment independent from a general operating system (OS) of the electronic device.

Aspects of the disclosure are to address at least the above-mentioned problems and/or disadvantages and to provide at least the advantages described below. Accordingly, an aspect of the disclosure is to provide an electronic device capable of showing greater performance of hardware by performing the user authentication using the virtual machine and safely protecting biometric information by controlling access of the VM to the biometric information.

The technical subjects pursued in the disclosure may not be limited to the above mentioned technical subjects, and other technical subjects which are not mentioned may be clearly understood, through the following descriptions, by those skilled in the art of the disclosure.

Additional aspects will be set forth in part in the description which follows and, in part, will be apparent from the description, or may be learned by practice of the presented embodiments.

### [Solution to Problem]

In accordance with an aspect of the disclosure, an electronic device is provided. The electronic device includes: a biometric sensor; a processor connected to the biometric sensor; a first memory connected to the processor and configured to store a first virtual machine, a first application and a second application which can access the biometric sensor; and a second memory connected to the processor and divided into a general area providing a general execution environment and a secure area providing a trusted execution environment in which access by software executed in the general execution environment can be controlled. The second memory stores instructions causing the processor to, when executed by the processor, load the first application to the general area from the first memory and execute the first application, load the first virtual machine to the general area from the first memory and execute the first virtual machine, in response to a request for the biometric authentication of the first application, the first virtual machine being allowed to access the trusted execution environment, based on a predetermined allowed virtual machine list, load the second application to the secure area from the first memory and execute the second application to acquire biometric information from the biometric sensor and perform the biometric authentication by using the acquired biometric information, and transmit, using the first virtual machine, a result of the biometric authentication performed by the second application to the first application.

In accordance with another aspect of the disclosure, a method of operating an electronic device is provided. The method includes: loading a first application to a general area of a second memory providing a general execution environment from a first memory of the electronic device and executing the first application by a processor of the electronic device; loading a first virtual machine performing a biometric authentication to the general area from the first memory and executing the first virtual machine, based on a request for the biometric authentication of the first application, the first virtual machine being allowed to access a trusted execution environment in which access by software executed in the general execution environment can be controlled, based on a predetermined allowed virtual machine list; loading a second application which can access a biometric sensor of the electronic device to a secure area of the second memory providing the trusted execution environment from the first memory and executing the second application to acquire biometric information from the biometric sensor and perform the biometric authentication using the acquired biometric information by the second application; and transmitting, using the first virtual machine, a result of the biometric authentication performed by the second application to the first application.

Another aspect of the disclosure provides a recording medium storing instructions that can be read by the processor of the electronic device. The instructions cause the processor to, when executed by the processor, load a first application to a general area of a second memory providing a general execution environment from a first memory of the electronic device and execute the first application, load a first virtual machine performing a biometric authentication to the general area from the first memory and execute the first virtual machine, based on a request for the biometric authentication of the first application, allow the first virtual machine to access a trusted execution environment in which access by software executed in the general execution environment can be controlled, based on a predetermined allowed virtual machine list, load a second application which can access a biometric sensor of the electronic device to a secure area of the second memory providing the trusted execution environment from the first memory and execute the second application, so as to acquire biometric information from the biometric sensor and perform the biometric authentication using the acquired biometric information by the second application, and transmit a result of the biometric authentication performed by the second application to the first application through the first virtual machine allowed to access the trusted execution environment.

### [Advantageous Effects of invention]

According to various aspects of the disclosure, the electronic device can have larger performance of hardware by performing the user authentication through the VM and safely protect biometric information by controlling access of the VM to the biometric information. Further, various effects directly or indirectly detected through the disclosure can be provided.

Other aspects, advantages, and salient features of the disclosure will become apparent to those skilled in the art from the following detailed description, which, taken in conjunction with the annexed drawings, discloses various embodiments of the disclosure.

### [Brief Description of Drawings]

FIG. 1 is a block diagram illustrating an electronic device within a network environment according to various embodiments.
FIG. 2 is a block diagram illustrating a program according to various embodiments.
FIG. 3 illustrates a hierarchical architecture of the electronic device according to various embodiments.
FIG. 4 illustrates a biometric information protection method using a memory access control module and an address conversion module according to an embodiment.
FIG. 5 illustrates a biometric authentication process in the hierarchical architecture of the electronic device according to an embodiment.
FIG. 6 illustrates a basic authentication process that should precede the biometric authentication in the hierarchical architecture of the electronic device according to an embodiment.
FIG. 7 illustrates the flow of information between ends through a secure channel in the hierarchical architecture of the electronic device according to an embodiment.
FIG. 8 illustrates the flow of information between ends through a secure channel in the hierarchical architecture of the electronic device according to an embodiment.
FIG. 9 illustrates an example of user interface (UI) elements displayed on the display while the biometric authentication process is performed.
FIG. 10 is a flowchart illustrating operations in which the electronic device safely protects biometric information required for the biometric authentication according to an embodiment.

### [Mode for the Invention]

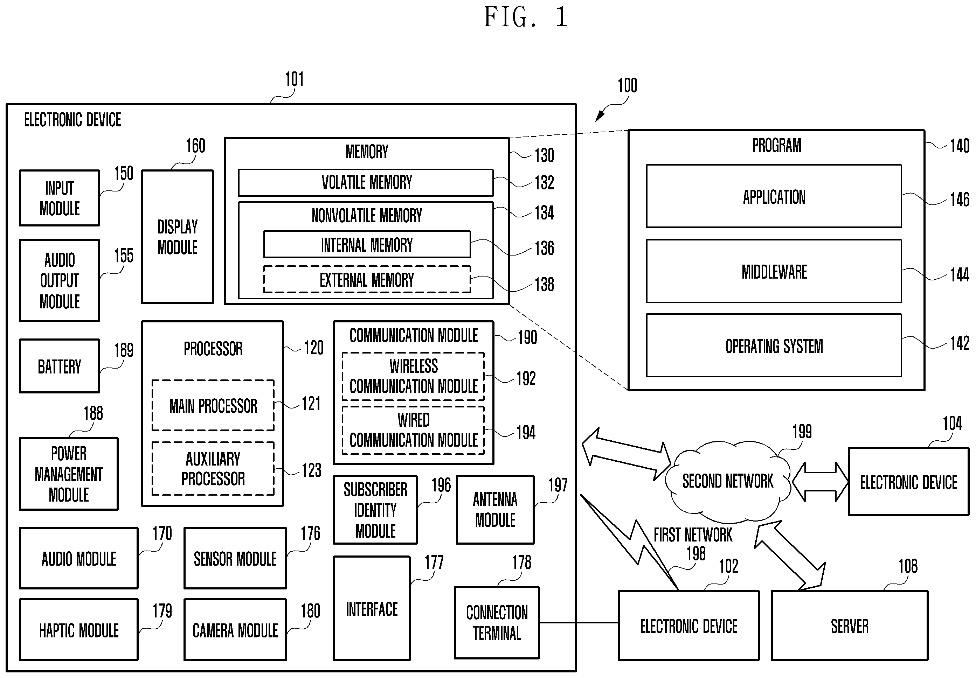

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5^{th} generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4th generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC. The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

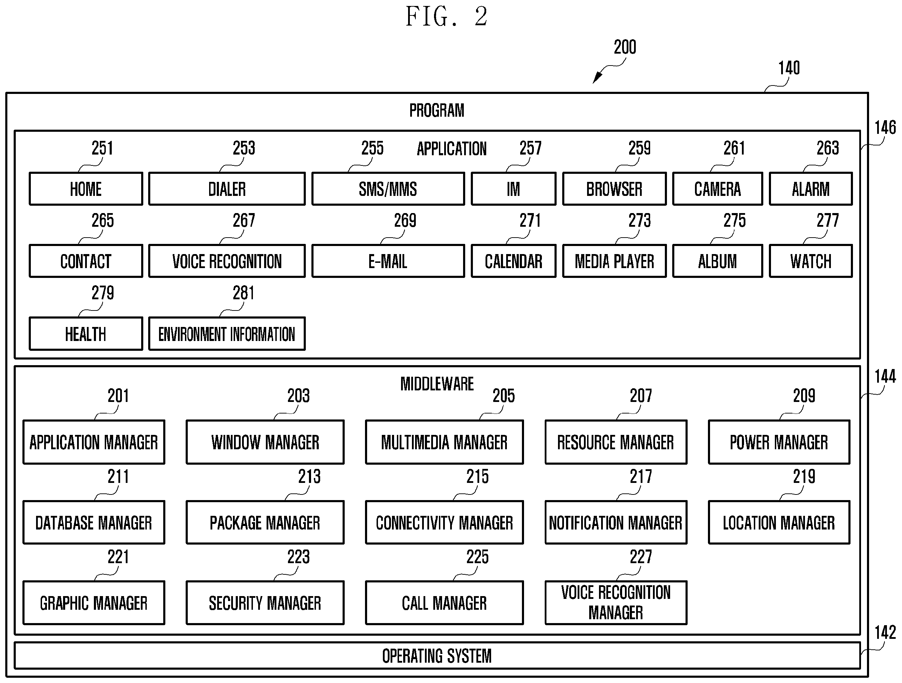

Fig. 2 is a block diagram 200 illustrating the program 140 according to various embodiments. According to an embodiment, the program 140 may include an operating system (OS) 142 to control one or more resources of the electronic device 101, middleware 144, or an application 146 executable in the OS 142. The OS 142 may include, for example, AndroidTM, iOSTM, WindowsTM, SymbianTM, TizenTM, or BadaTM. At least part of the program 140, for example, may be pre-loaded on the electronic device 101 during manufacture, or may be downloaded from or updated by an external electronic device (e.g., the electronic device 102 or 104, or the server 108) during use by a user.

The OS 142 may control management (e.g., allocating or deallocation) of one or more system resources (e.g., process, memory, or power source) of the electronic device 101. The OS 142, additionally or alternatively, may include one or more driver programs to drive other hardware devices of the electronic device 101, for example, the input module 150, the sound output module 155, the display module 160, the audio module 170, the sensor module 176, the interface 177, the haptic module 179, the camera module 180, the power management module 188, the battery 189, the communication module 190, the subscriber identification module 196, or the antenna module 197.

The middleware 144 may provide various functions to the application 146 such that a function or information provided from one or more resources of the electronic device 101 may be used by the application 146. The middleware 144 may include, for example, an application manager 201, a window manager 203, a multimedia manager 205, a resource manager 207, a power manager 209, a database manager 211, a package manager 213, a connectivity manager 215, a notification manager 217, a location manager 219, a graphic manager 221, a security manager 223, a telephony manager 225, or a voice recognition manager 227.

The application manager 201, for example, may manage the life cycle of the application 146. The window manager 203, for example, may manage one or more graphical user interface (GUI) resources that are used on a screen. The multimedia manager 205, for example, may identify one or more formats to be used to play media files, and may encode or decode a corresponding one of the media files using a codec appropriate for a corresponding format selected from the one or more formats. The resource manager 207, for example, may manage the source code of the application 146 or a memory space of the memory 130.The power manager 209, for example, may manage the capacity, temperature, or power of the battery 189, and determine or provide related information to be used for the operation of the electronic device 101 based at least in part on corresponding information of the capacity, temperature, or power of the battery 189. According to an embodiment, the power manager 209 may interwork with a basic input/output system (BIOS) (not shown) of the electronic device 101.

The database manager 211, for example, may generate, search, or change a database to be used by the application 146. The package manager 213, for example, may manage installation or update of an application that is distributed in the form of a package file. The connectivity manager 215, for example, may manage a wireless connection or a direct connection between the electronic device 101 and the external electronic device. The notification manager 217, for example, may provide a function to notify a user of an occurrence of a specified event (e.g., an incoming call, message, or alert). The location manager 219, for example, may manage locational information on the electronic device 101. The graphic manager 221, for example, may manage one or more graphic effects to be offered to a user or a user interface related to the one or more graphic effects.

The security manager 223, for example, may provide system security or user authentication. The telephony manager 225, for example, may manage a voice call function or a video call function provided by the electronic device 101. The voice recognition manager 227, for example, may transmit a user's voice data to the server 108, and receive, from the server 108, a command corresponding to a function to be executed on the electronic device 101 based at least in part on the voice data, or text data converted based at least in part on the voice data. According to an embodiment, the middleware 244 may dynamically delete some existing components or add new components. According to an embodiment, at least part of the middleware 144 may be included as part of the OS 142 or may be implemented as another software separate from the OS 142.

The application 146 may include, for example, a home 251, dialer 253, short message service (SMS)/multimedia messaging service (MMS) 255, instant message (IM) 257, browser 259, camera 261, alarm 263, contact 265, voice recognition 267, email 269, calendar 271, media player 273, album 275, watch 277, health 279 (e.g., for measuring the degree of workout or biometric information, such as blood sugar), or environmental information 281 (e.g., for measuring air pressure, humidity, or temperature information) application. According to an embodiment, the application 146 may further include an information exchanging application (not shown) that is capable of supporting information exchange between the electronic device 101 and the external electronic device. The information exchange application, for example, may include a notification relay application adapted to transfer designated information (e.g., a call, message, or alert) to the external electronic device or a device management application adapted to manage the external electronic device. The notification relay application may transfer notification information corresponding to an occurrence of a specified event (e.g., receipt of an email) at another application (e.g., the email application 269) of the electronic device 101 to the external electronic device. Additionally or alternatively, the notification relay application may receive notification information from the external electronic device and provide the notification information to a user of the electronic device 101.

The device management application may control the power (e.g., turn-on or turn-off) or the function (e.g., adjustment of brightness, resolution, or focus) of the external electronic device or some component thereof (e.g., a display module or a camera module of the external electronic device). The device management application, additionally or alternatively, may support installation, delete, or update of an application running on the external electronic device.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

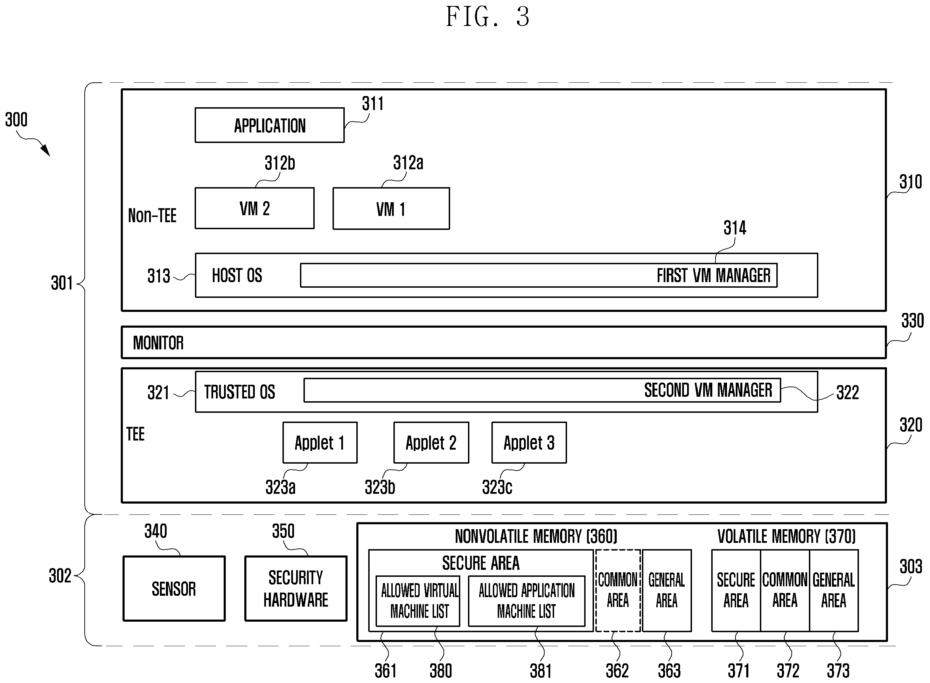

FIG. 3 illustrates a hierarchical architecture of an electronic device 300 according to various embodiments. In a description of FIG. 3, the description for elements overlapping those in FIG. 2 are omitted or simplified. Referring to FIG. 3, the electronic device 300 (for example, the electronic device 101 of FIG. 1) may include software 301 and hardware 302. The software 301 may include a non-TEE 310, a TEE 320, and a monitor 330. The hardware 302 may include a memory 303, a sensor 340, and a security hardware 350. The memory 303 may include a nonvolatile memory 360 and a volatile memory 370. The software 301 (for example, the program 140 of FIG. 1 or 2) may be stored as instructions in the nonvolatile memory 360 (for example, the nonvolatile memory 134 of FIG. 1) and loaded to the volatile memory 370 (for example, the volatile memory 132 of FIG. 1) and execute by at least one processor 120. The nonvolatile memory 360 may include a secure area 361, a common area 362, and a general area 363. The volatile memory 370 may include a secure area 371, a common area 372, and a general area 373. In an embodiment, the common area 362 may be omitted in the nonvolatile memory 360, and thus the nonvolatile memory 360 may include the secure area 361 and the general area 363. Although not illustrated, the electronic device 300 may further include at least one processor 120 configured to execute the software 301 as an element, and environments for executing the non-TEE 310 and the TEE 320 may be separated from one processor 120 or may be included in different processors 120. Hereinafter, the operation of the element the illustrated software 301 may be understood as the operation of at least one processor 120. Hereinafter, for convenience of description, at least one processor 120 is referred to as the 'processor 120'.

The non-TEE 310 may be installed in the general area 363 and/or the common area 362 of the nonvolatile memory 360. The non-TEE 310 may be loaded to the general area 373 and/or the common area 372 of the volatile memory 370 in the area of the installed nonvolatile memory 360 and executed by the processor 120. The non-TEE 310 may include an application 311, virtual machines 312a and 312b, and a host OS 313.

The virtual machines 312a and 312b may emulate a computing environment in software. For example, the virtual machines 312a and 312b may operate as electronic devices separate from the electronic device 300 by using an area allocated to the virtual machines in the hardware 302 (for example, some of the general area and/or the common area of the memory 303). Software may be installed in the virtual machines 312a and 312b. For example, software (for example, an application) for a biometric authentication may be installed in the first virtual machine 312a. A general OS and/or a trusted OS may be installed in the first virtual machine 312a. For example, the general OS for performing an operation requiring high performance in operations for the biometric authentication and/or the trusted OS for performing an operation requiring security of biometric information in the biometric authentication may be installed in the first virtual machine 312a. In another example, the trusted OS for performing all operations related to the biometric authentication may be installed in the first virtual machine 312a. A guest OS (or a non-trusted OS or the general OS) may be installed in the second virtual machine 312b. The application 311 and the host OS 313 may be installed in the nonvolatile memory 360 and loaded to the volatile memory 370 and executed. The host OS 313 may include a first virtual machine manager 314 for managing access of the virtual machine to the TEE 320. The first virtual machine manager 314 may be included in a software layer (for example, the middleware 144 of FIG. 1 or FIG. 2) executed on the basis of the host OS 313. The host OS may include, for example, Android^{™}, iOS^{™}, Windows^{™}, Symbian^{™}, Tizen^{™}, or Bada^{™}. The same type operating system as or a different type operating system from the host OS 313 may be applied to the guest OS installed in the second virtual machine 312b and/or the general OS installed in the first virtual machine 312a.

The TEE 320 may be installed in the secure area 361 and/or the common area 362 of the nonvolatile memory 360. The TEE 320 may be loaded to the secure area 371 and/or the common area 372 of the volatile memory 132 from the area of the installed nonvolatile memory 360 and executed by the processor 120. The trusted OS 321, the second virtual machine manager 322, and one or more applications 323a, 323b, and 323c (for example, applets) may be executed in the TEE 320. The trusted OS (or secure OS) 321 may provide an environment in which elements included in the TEE 320 can operate. For example, the trusted OS may provide an interface required for the user authentication. An application programming interface (API) for allowing at least one of the applets 323a, 323b, and 323c, the sensor 340, the security hardware 350, and/or the secure area of the memory 303 to be used. As an example of the trusted OS, an OS for Internet banking or electronic payment may be included in the trusted OS 321. The trusted OS 321 may include the second virtual machine manager 322. In another example, the second virtual machine manager 322 may be implemented as separate software independent from the trusted OS 321.

The monitor 330 may be installed in at least one of the secure area 361, the common area 362, and the general area 363 of the nonvolatile memory 360. The monitor 330 may be loaded to the secure area 371 and/or the common area 372 of the volatile memory 370 from the area of the installed nonvolatile memory 360 and executed by the processor 120. The monitor 330 may relay or control communication between the non-TEE 310 and the TEE 320. The non-TEE 310 cannot directly access the TEE 320 (for example, read data from the TEE 320) and may be configured to access the TEE 320 through the monitor 330. For example, the TrustZone technology of the Advanced reduced instruction set computer (RISC) Machine (ARM) may be applied to the monitor 330.

The application 311 (for example, the application 146 of FIG. 1 or FIG. 2) may provide the user with a function or a service requiring the user authentication. For example, the application 311 may be an application that provides an online service (for example, contact-free issue of a credit card, financial transaction, or a digital car key for starting a rented car or a shared car) through communication with an external device (for example, the server 108 of FIG. 1). The application 311 may be an application that provides an offline service (for example, an identification service for purchasing products (for example, cigarette) in an offline shop). The application 311 may include an application preloaded to the electronic device 300 and/or an application installed after download. The application 311 according to various embodiments of the disclosure has no limitation in the type thereof if the application includes a function related to the user authentication.

The user authentication conducted by the electronic device 101 may be divided into a primary authentication and a secondary authentication. The application 311 may support the primary authentication. The application 311 may support the secondary authentication (or biometric authentication) of biometric information for providing a function or a service after the primary user authentication is successful. For example, the application 311 may output a user interface (UI) for inducing the user to input user information. For example, the application 311 may support the primary authentication by providing the user with a screen (for example, lock screen) displayed on the display of the electronic device 101. A primary authentication application (for example, applet 1 323a) within the TEE 320 may receive user information (for example, pin, pattern, or password) from the user through the hardware 302 (for example, a touch sensor) and compare the received user information with user information stored in the memory, so as to perform the primary authentication. When the two pieces of user information match and the primary authentication is successful, the application 311 may make a request for the secondary authentication to a secondary authentication application (for example, the first virtual machine 312a) through the first virtual machine manager 314.

The first virtual machine manager 314 (for example, a hypervisor or a virtual machine monitor) may control the access of the virtual machines 312a and 312b to the TEE 320.

In an embodiment, the first virtual machine manager 314 may transmit a request of the application 311 (for example, a biometric authentication request) to the virtual machine (for example, the first virtual machine 312a). After the request is transmitted to the virtual machine, the first virtual machine manager 314 may receive a request for accessing the TEE 320 from the virtual machine. An allowed virtual machine (VM) list may be stored in the memory 303. The first virtual machine manager 314 may determine whether to allow the corresponding virtual machine to access the TEE 320 with reference to the allowed virtual machine list 380. The allowed virtual machine list 380 according to an embodiment may be stored in the secure area 361 of the nonvolatile memory 360. Although not illustrated, some or all of the allowed virtual machine list 380 may be stored in the common area 362 of the nonvolatile memory 360. The allowed virtual machine list 380 may be encrypted and stored in the secure area 361 and/or the common area 362. The allowed virtual machine list 380 may be loaded to the secure area 371 and/or the common area 372 of the volatile memory 370 from the stored area of the nonvolatile memory 360. When the allowed virtual machine list 380 is encrypted, the allowed virtual machine list may be decrypted by the processor 120 and loaded to the volatile memory 370. A right to access the allowed virtual machine list 380 loaded to the volatile memory 370 may be assigned to the first virtual machine manager 314 by the monitor 330. When the virtual machine having made the request for access (for example, VM 1 312a) is recorded as a virtual machine having a right to access the TEE 320 in the allowed virtual machine list 380, the first virtual machine manager 314 may allow the virtual machine having made the request for access to access the TEE 320. The virtual machine allowed to access may read data which the application executed in the TEE 320 acquired from the hardware 302.

In an embodiment, the first virtual machine manager 314 may receive, from the virtual machine, a request for accessing a security application (for example, the second applet 323b) configured to acquire biometric information (for example, a fingerprint, iris, or a face) among the applications which can be executed in the TEE 320. The first virtual machine manager 314 may determine whether to allow the corresponding virtual machine to access the security application with reference to the allowed virtual machine list 380. When the virtual machine (for example, VM 1 312a) having made the request for accessing is recorded as a virtual machine having a right to access the security application in the allowed virtual machine list 380, the first virtual machine manager 314 may allow the virtual machine having made the request for accessing to access the security application. The virtual machine allowed to access may read data which the security application acquired from the hardware 302 (for example, the sensor 340).

The second virtual machine manager 322 may control access of the virtual machines 312a and 312b to the TEE 320 on behalf of or in addition to the first virtual machine manager 314.

The sensor 340 may include a fingerprint sensor and/or an image sensor which the security application accesses to acquire biometric information. The security hardware 350 may include a processor specialized in security (for example, embedded secure element (eSE) or a secure processor). In an embodiment, the security hardware 350 may control access of the application within the TEE 320 to the sensor 340. For example, the security hardware 350 may receive a request for accessing the sensor 340 from the application (for example, the second applet 323b). An allowed application list 381 may be stored in the memory 303. The security hardware 350 may determine whether to allow access to the sensor 340 with reference to the allowed application list 381. The allowed application list 381 may be stored in the secure area 361 of the nonvolatile memory 360. Although not illustrated, some or all of the allowed application list 381 may be stored in the common area 362 of the nonvolatile memory 360. The allowed application list 381 may be encrypted and stored in the secure area 361 and/or the common area 362. The allowed application list 381 may be loaded to the secure area 371 of the volatile memory 370 from the stored area of the nonvolatile memory 360. When the allowed application list 381 is encrypted, the allowed application may be decrypted by the processor 120 and then loaded to the volatile memory 370. The right to access the allowed application list 381 loaded to the volatile memory 370 may be assigned to the security hardware 350. When the application having made the request for access is recorded as an application having a right to access the sensor 340 in the allowed application list 381, the security hardware 350 may allow the application having made the request for accessing to access the sensor 340. The application allowed to access may acquire biometric information from data generated by the sensor 340.

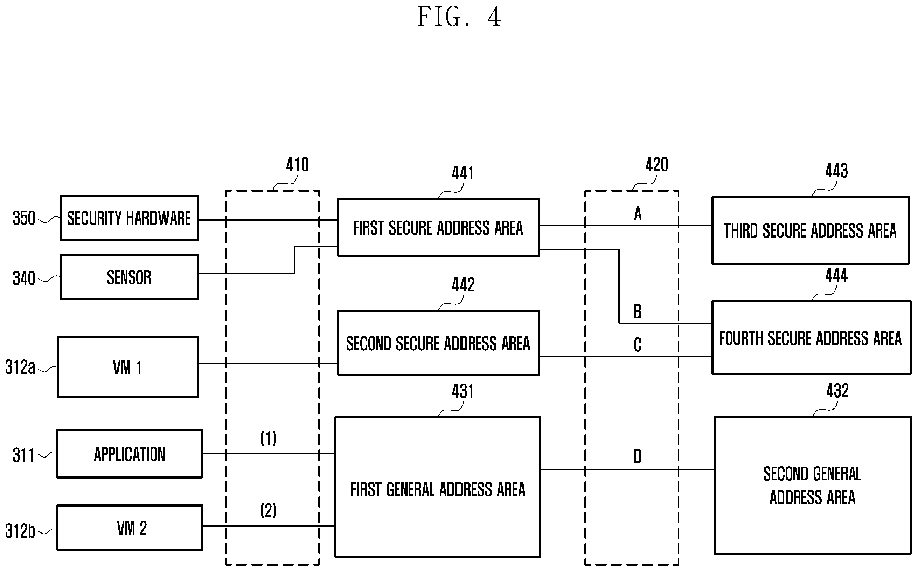

FIG. 4 illustrates a biometric information protection method using a memory access control module 410 and an address conversion module 420 according to an embodiment.

When the electronic device is booted, the memory access control module 410 may be loaded to the volatile memory 132 (for example, the secure area) and executed by the processor 120. The memory access control module 410 may configure a right to access the memory by elements of the electronic device for each physical address area (or each logical address area) of the memory in which data can be read and written. For example, the memory access control module 410 may configure a first general address area 431 as an address area which the application 311 and VM 2 312b can access in the general area of the volatile memory 132. The memory access control module 410 may configure a first secure address area 441 as an address area which the sensor 340 and the security hardware 350 can access in the secure area of the volatile memory 132. The memory access control module 410 may configure a second secure address area 442 as an address area which VM 1 312a for the biometric authentication can access in the secure area of the volatile memory 132.

When the electronic device is booted, the address conversion module 420 may be loaded to the volatile memory 370 (for example, the secure area or the common area) and executed by the processor 120. The address conversion module 420 may provide the relation between addresses in the secure area of the volatile memory 132 and the relation between addresses in the general area of the volatile memory 132. For example, the address conversion module 420 may operate on the basis of an address conversion table. There is no limitation in the form of the address conversion module 420. For example, the address conversion module 420 may be the address conversion table itself stored in the memory 130. For example, at least one module referring to the address conversion table may access an address of the memory in which the address conversion table is stored and read address conversion data. An intermediate physical address (IPA) and a physical address (PA) related thereto may be mapped and stored in the address conversion table. For example, the security hardware 350 may identify the relation (A) between the intermediate physical addresses (IPAs) of the first secure address area 441 and the physical addresses (PAs) of the third secure address area 443 through the address conversion module 420. The security hardware 350 may access data in the third secure address area 443 through the relation (A). The sensor 340 may identify the relation (B) between IPAs of the first secure address area 441 and PAs of the fourth secure address area 444 through the address conversion module 420. The sensor 340 may write data (for example, biometric information) in the fourth secure address area 444. VM 1 312a may identify the relation (C) between IPAs of the second secure address area 442 and PAs of the fourth secure address area 444 through the address conversion module 420. VM1 312a may read data recorded by the sensor 340 through the relation (C). According to an embodiment, the relation (D) between IPAs of the first general address area 431 and PAs of the second general address area 432 may be additionally included in the address conversion module 420.

According to an embodiment, VM 1 312a may read the data, which the sensor 340 records in the PA through the relation (B), through the relation (C). Other elements (e.g., application 311 and VM 2 312b) which cannot know the relation (C) cannot read sensor data, and accordingly, the sensor data (for example, biometric information) cannot be safely protected from the elements to which no access right is assigned.

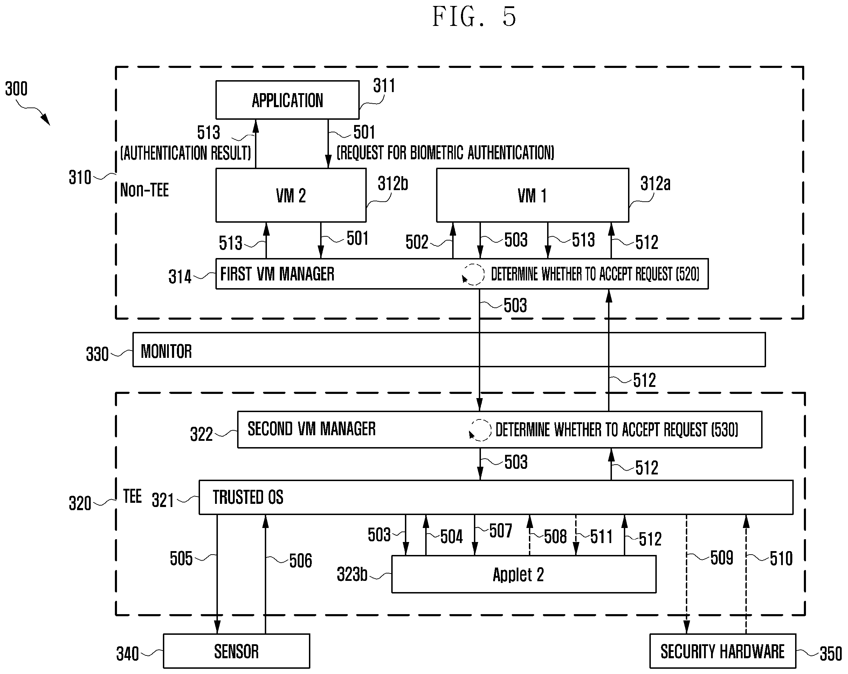

FIG. 5 illustrates a biometric authentication process in the hierarchical architecture of the electronic device 300 according to an embodiment.

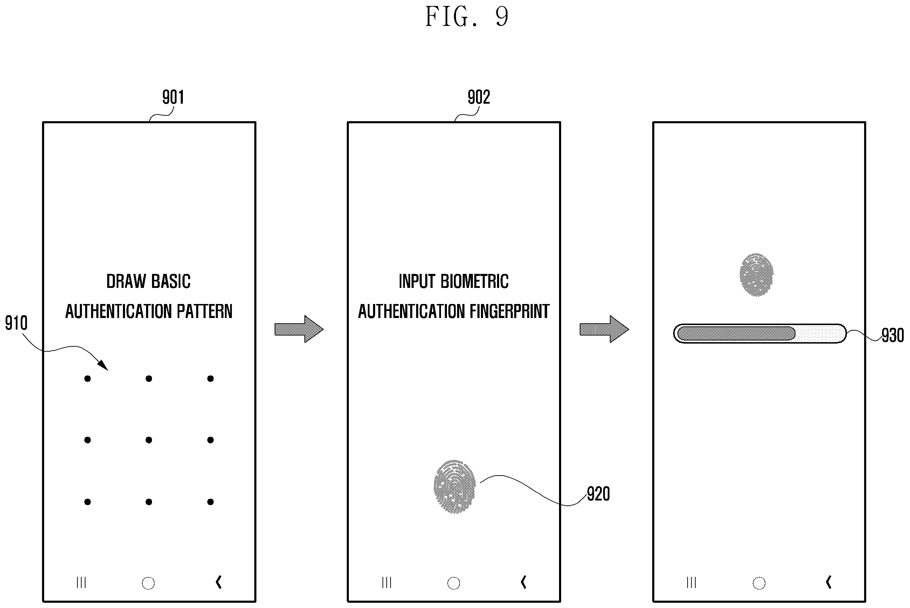

The application 311 may call a biometric authentication application by using an application programming interface (API) or a software development kit (SDK) provided by the non-trusted OS installed in VM 2 312b. For example, the application 311 may receive a user input that calls a graphic element (for example, a user interface (UI) element) for inducing the user to input biometric information on the display through an input device. For example, a button for calling a function using the biometric information may be displayed on the display, and the application 311 may receive a user's touch input for the menu displayed on the display. The application 311 may display the UI element on the display in response to the user input. For example, when the biometric authentication of the electronic device 300 uses a fingerprint, the application 311 may display a UI element (for example, a UI element 920 of FIG. 9 described below) including an image embodying the fingerprint. Alternatively, when the biometric authentication uses iris or a face, the application 311 may display a UI element including a preview image (or an image embodying pupil or a face) captured by a camera disposed on the same surface as the display. According to an embodiment, the application 311 may transmit a biometric authentication request message 501 indicating calling of the biometric authentication application to VM 2 312b in response to the user call for the UI element (for example, a touch input for the UI element).

VM 2 312b may transmit the biometric authentication request message 501 to a first VM manager 314. The first VM manager 314 may receive the biometric authentication request message 501 and transmit a biometric authentication function call message 502 to VM 1 312a in which the biometric authentication application is installed in response thereto. For example, when VM 1 312a is not being executed, the first VM manager 314 may execute VM 1 312a. For example, the processor 120 may load VM 1 312a to the non-TEE 310 of the volatile memory 132 from the nonvolatile memory 134 and execute the same. In an embodiment, when receiving the biometric authentication request message 501, the first VM manager 314 may determine whether the request is a reasonable request and, when it is determined that the request is the reasonable request, transmit the biometric authentication function call message 502 to VM 1 312a. For example, when the application generating the biometric authentication request message 501 and/or VM 2 312b relaying the biometric authentication request message 501 is a predetermined caller to call VM 1 312a, the first VM manager 314 may transmit the biometric authentication function call message 502 to VM 1 312a.

VM 1 312a may transmit a biometric authentication request message 503 to the TEE 320 through the first VM manager 314 on the basis of reception of the biometric authentication function call message 502. VM 1 312a may insert encrypted biometric information (for example, biometric information stored in the secure area 371) to be used for the biometric authentication into the biometric authentication request message 503 and transmit the message to the TEE 320. The first VM manager 314 may perform operation 520 of determining whether to accept the user authentication request of VM 1 312a on the basis of reception of the biometric authentication request message 503 from VM 1 312a. For example, the first VM manager 314 may identify VM 1 312a in the allowed virtual machine list 380 loaded to the volatile memory 370 and accordingly may allow VM 1 312a to access the TEE 320 (or the trusted OS 321). In another example, among the applications within the TEE 320, applet 2 323b may be configured to perform the user authentication. The first VM manager 314 may identify that VM 1 312a is a virtual machine having a right to access applet 2 323b in the allowed virtual machine list 380 and accordingly may allow VM 1 312a to access the TEE 320. The first VM manager 314 may safely protect biometric information by controlling access to the TEE 320 by elements (for example, other virtual machines) to which the right to access the TEE 320 is not assigned.

When the biometric authentication request of VM 1 312a is allowed on the basis of the result of operation 520, the first VM manager 314 may transmit the biometric authentication request message 503 to the TEE 320. For example, the first VM manager 314 may first call the monitor 330. When the monitor 330 is not being executed, the processor 120 may load the monitor 330 to the secure area 371 of the volatile memory 370 from the nonvolatile memory 360 and execute the same as the first VM manager 314 calls the monitor 330. The monitor 330 may transmit the biometric authentication request message 503 of VM 1 312a to the second VM manager 322 of the TEE 320.

The second VM manager 322 may perform operation 530 of determining whether to accept the biometric authentication request of VM 1 312a on the basis of the allowed virtual machine list 380 on behalf of or in addition to the first VM manager 314. When the biometric authentication request of VM 1 312a is allowed on the basis of the result of operation 530, the second VM manager 322 may transmit the biometric authentication request message 503 to the trusted OS 321. The trusted OS 321 may transmit the biometric authentication request message 503 to applet 2 323b serving to perform the biometric authentication.

Applet 2 323b may receive the biometric authentication request message 503 through the trusted OS 321. Applet 2 323b may transmit a message 504 making a request for acquiring biometric information from the sensor 340 to the trusted OS 321 in response to reception of the biometric authentication request message 503. The second VM manager 322 may configure the trusted OS 321 to access the sensor 340. The trusted OS 321 to which the right to access the sensor 340 is assigned may determine whether applet 2 323b can access the biometric information acquired by the sensor 340. For example, the trusted OS 321 may identify applet 2 323b in the allowed application list 381 loaded to the secure area 371. Accordingly, the trusted OS 321 may transmit the request message 505 making a request for acquiring biometric information to the sensor 340. The sensor 340 may generate biometric information (for example, fingerprint data). The sensor 340 may transmit a response message 506 including the generated biometric information to the trusted OS 321 in response to reception of the request message 505. The trusted OS 321 may acquire biometric information from the response message 506 and transmit a response message 507 including the acquired biometric information to applet 2 323b.

Applet 2 323b may acquire encrypted biometric information from the biometric authentication request message 503. In an embodiment, applet 2 323b may decrypt the acquired encrypted biometric information. In another embodiment, applet 2 323b may transmit a message 508 making a request for decrypting the acquired encrypted biometric information to the trusted OS 321. The second VM manager 322 may configure the trusted OS 321 to access the security hardware 350. The trusted OS 321 to which the right to access the security hardware 350 is assigned may transmit a request message 509 making a request for decrypting the encrypted biometric information to the security hardware 350. The security hardware 350 may decrypt the encrypted biometric information in response to reception of the request message 509 and transmit a response message 510 including the decrypted biometric information to the trusted OS 321. The trusted OS 321 may acquire biometric information from the response message 510 and transmit a response message 511 including the acquired biometric information to applet 2 323b.

Applet 2 323b may compare the biometric information that is received from VM 1 312a and decrypted (hereinafter, referred to as first biometric information) with the biometric information acquired from the sensor 340 (hereinafter, referred to as second biometric information) and generate an authentication result indicating whether the second biometric information is valid on the basis of the comparison result. Applet 2 323b may transmit a response message 512 including the authentication result to the trusted OS 321. In addition, applet 2 323b may further insert the second biometric information into a response message 512 and transmit the message to the trusted OS 321 in order to verify the authentication result. The trusted OS 321 may transmit the response message 512 to the second VM manager 322. The second VM manager 322 may transmit the response message 512 to the first VM manager 314 through the monitor 330. The first VM manager 314 may transmit the response message 512 received from the TEE 320 to VM 1 312a in response to the biometric authentication request of VM 1 312a. VM 1 312a may transmit a response message 513 including the authentication result to the application 311 through the first VM manager 314 and VM 2 312b. In an embodiment, the authentication result to be transmitted to the application 311 may be the same as the authentication result received from applet 2 323b. In another embodiment, VM 1 312a may re-identify validity of the second biometric information by comparing the second biometric information received from applet 2 323b with the first biometric information. When the second biometric information is valid, VM 1 312a may transmit the response message 513 including the result of the authentication performed in applet 2 323b to the application 311. According to another embodiment, other information as well as the second biometric information may be additionally used as information for authenticating the user. For example, the electronic device 300 may periodically collect location information related to a region including the user's home and office, and the place where the UE frequently visits through a communication circuit (for example, the wireless communication module 192 of FIG. 1) and store the same in the memory 303. VM 1 312a may detect the user's location at a time point at which the biometric authentication request of the application 311 is made by using location-related data (for example, global positioning system (GPS) information, an IP address, and BS information) collected through the communication circuit (for example, the wireless communication module 192 of FIG. 1) of the electronic device 300. VM 1 312a may compare the detected user's location with the location information stored in the memory 303 and determine whether the user is a person qualified to use the electronic device 300. As it is proved that the user is the person qualified to use on the basis of the determination result, VM 1 312a may transmit the response message 513 including the result of the authentication performed in applet 2 323b to the application 311.

According to an embodiment, power to control access to the data generated by the sensor 340 may be assigned to the security hardware 350. For example, applet 2 323b may make a request for allowing access to the data generated by the sensor 340 to the security hardware 350 through the trusted OS 321. The security hardware 350 may identify that applet 2 323b is recorded in the allowed application list 381 and accordingly may assign the right to access the data generated by the sensor 340 to applet 2 323b. As the right to access is assigned, applet 2 323b may receive the data generated by the sensor 340 from the security hardware 350 through the trusted OS 321.

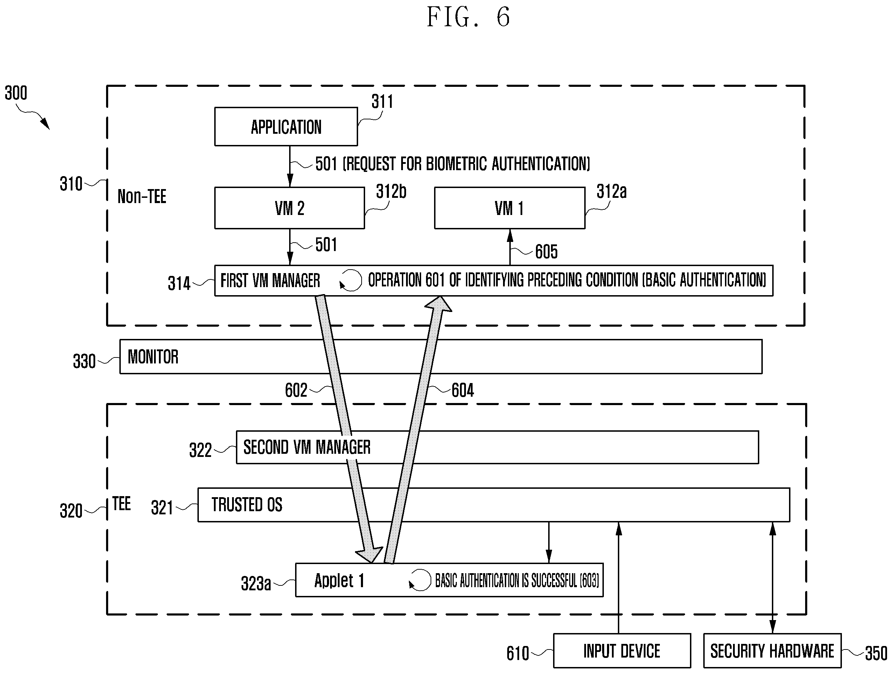

FIG. 6 illustrates a basic authentication process that should precede the biometric authentication in the hierarchical architecture of the electronic device according to an embodiment. A description overlapping FIG. 5 is omitted or simplified.

VM 2 312b may transmit the biometric authentication request message 501 to the first VM manager 314. The first VM manager 314 may perform operation 601 of identifying a preceding condition for the biometric authentication in response to reception of the biometric authentication request message 501. For example, information indicating what the preceding condition is may be loaded to the volatile memory 370, and the first VM manager 314 may identify that rooting (for example, the user acquires a root account which is the highest authority account of the Android OS) or the basic authentication for unlocking is the preceding condition in the loaded information.

The first VM manager 314 may transmit a basic authentication request message 602 to the TEE 320 through the monitor 330. For example, the first VM manager 314 may call the monitor 330 for the basic authentication and transmit the basic authentication request message 602. The monitor 330 may make a request for the basic authentication to applet 1 323a in response to reception of the basic authentication request message 602. For example, the monitor 330 may access the trusted OS 321 through the second VM manager 322 (or directly), and the trusted OS 321 may call applet 1 323a configured to perform the basic authentication. Accordingly, applet 1 323a may receive the basic authentication request message 602.

Applet 1 323a may receive user information (for example, pin, pattern, or password), which the user inputs into the electronic device through an input device 610, from the trusted OS 321 in response to reception of the basic authentication request message 602. Applet 1 323a may compare the received user information with the user information stored in the memory and recognize that the two pieces of information match on the basis of the comparison result, so as to succeed in the basic authentication 603.

Power to control the access to user information input into the electronic device through the input device 610 may be assigned to the security hardware 350. For example, applet 1 323a may make a request for allowing the access to the user information to the security hardware 350 through the trusted OS 321. The security hardware 350 may identify that applet 1 323a is recorded in the allowed application list 381 and accordingly may assign the right to access the user information received through the input device 610 to applet 1 323a. As the right to access is assigned, applet 1 323a may receive the data received from the input device 610 from the security hardware 350 through the trusted OS 321.

Applet 1 323a may transmit a response message 604 indicating the basic authentication success to the non-TEE 310 through the monitor 330. In addition, applet 1 323a may process (for example, encrypt and/or perform electronic signature) the authentication result indicating the basic authentication success, insert the processing result into the response message 604, and transmit the response message to the non-TEE 310. The first VM manager 314 may receive the response message 604 indicating the authentication success by the TEE 320 through the monitor 330 and identify the basic authentication success. When the basic authentication is successful, the first VM manager 314 may transmit the biometric authentication request message 705 to VM 1 312a. VM 1 312a may perform the biometric authentication procedure of FIG. 5 according to reception of the biometric authentication request message 605.

When the basic authentication is not performed as the preceding condition for the biometric authentication after booting of the electronic device, the biometric authentication itself may not be performed, and accordingly, the biometric information can be safely protected.

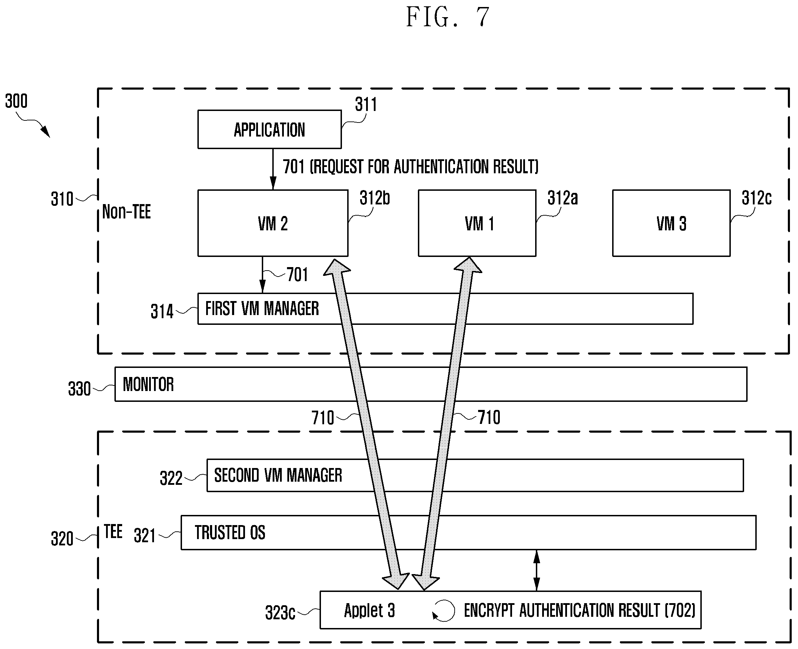

FIG. 7 illustrates the flow of information between ends through a secure channel in the hierarchical architecture of the electronic device according to an embodiment. A description overlapping FIGs. 5 and 6 is omitted or simplified.

After transmitting the biometric authentication request message (for example, 501 of FIG. 5 or FIG. 6) to VM 2 312b, the application 311 may transmit an authentication result request message 701 making a request for informing of the result of the biometric authentication to VM 2 312b in order to conduct the service. According to an embodiment, when a predetermined time passes after the biometric authentication request message is transmitted, the application 311 may transmit the authentication result request message 701. VM 2 312b may transmit the authentication result request message 701 received from the application 311 to the first VM manager 314.

The first VM manager 314 may establish a secure channel 710 between ends in response to reception of the authentication result request message 701. For example, the first VM manager 314 may identify unique information indicating VM 2 312b (caller) having made the request for data (authentication result) and identify unique information indicating VM 1 312a (receiver) which can process the request 801. The first VM manager 314 may identify that VM 2 unique information matches VM 1 unique information in an access list (for example, stored in the memory 303) and accordingly may establish the secure channel 710 (in other words, a path or a session) through which the authentication result processed by VM 1 312a is transmitted to VM 2 312b. In an embodiment, the secure channel 810 may include software within the TEE 320 located between the two ends (e.g., VM 1 312a and VM 2 312b) to process data. For example, the secure channel 810 may include applet 3 323c for signing and encrypting the data (for example, authentication result) received from VM 1 312a and transmitting the same to VM 2 312b.

The first VM manager 314 may receive the authentication result from VM 1 312a through the secure channel 810 and transmit the authentication result to applet 3 323c. Applet 3 323c may perform operation 702 of encrypting the authentication result received through the secure channel 710. The first VM manager 314 may receive a response message including the signed and encrypted authentication result through the secure channel 710 and transmit the same to VM 2 312b. The first VM manager 314 may allow data transmission through the secure channel 710, thereby safely protecting the data from elements (for example, VM 3 312c) which are not included in the secure channel 710 (in other words, elements which are not the caller).

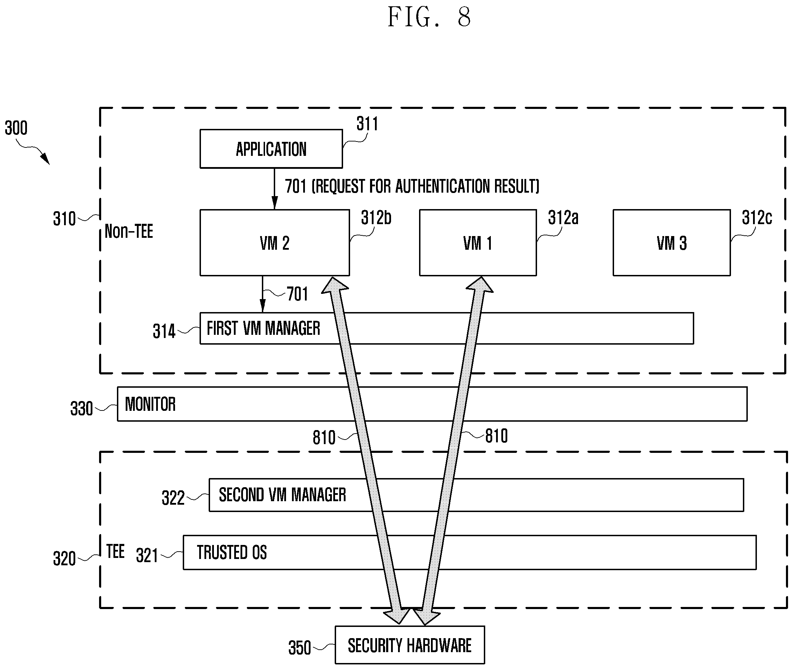

FIG. 8 illustrates the flow of information between ends through a secure channel in the hierarchical architecture of the electronic device according to an embodiment. A description overlapping FIG. 7 is omitted or simplified.

The first VM manager 314 may establish a secure channel 810 between ends in response to reception of the authentication result request message 701. In an embodiment, the secure channel 810 may include hardware which is located between the two ends (e.g., VM 1 312a and VM 2 312b) to store data and which can be access through the TEE 320. For example, the secure channel 810 may include the security hardware 350 which stores data received from VM 1 312a through the TEE 320 and transmits the stored data to VM 2 312b in response to the authentication result request message 701.

The first VM manager 314 may receive the authentication result from VM 1 312a through the secure channel 810 and transmit the authentication result to the security hardware 350. The first VM manager 314 may receive a response message including the authentication result through the secure channel 810 and transmit the same to VM 2 312b. The first VM manager 314 may allow data transmission through the secure channel 810, thereby safely protecting data from an element (for example, VM 3 312c) which is not included in the secure channel 810.

In an embodiment, an application (for example, applet 3 323c) in the TEE 320 for signing and encrypting data stored in the security hardware 350 to VM 2 312b may be further included in the secure channel 810.

FIG. 9 illustrates an example of UI elements displayed on the display while the biometric authentication process is performed.

The processor 120 may display an execution screen 901 of the application including a first UI element 910 for inducing the user to input user information (for example, pattern) on a touch sensitive display (for example, the display module 160 of FIG. 1). For example, the application 311 supporting the basic authentication may generate the first UI element 910 and display the same on the execution screen 901 (for example, lock screen). In another example, applet 1 323a receiving the basic authentication request message 602 may display the execution screen 901 including the first UI element 910 on the display. In another example, an OS (for example, the host OS 313 or the trusted OS 321) receiving a request of the application may generate the first UI element 910. The elements which generate the first UI element 910 are only examples and there is no limitation.

When the basic authentication is succeeded by the element (for example, applet 1 323a) serving to perform the corresponding authentication as pattern information received through the first UI element 910 matches pre-stored pattern information, the processor 120 may perform the biometric authentication process (for example, the biometric authentication process of FIG. 5). The processor 120 may display an execution screen 902 of the application including a second UI element 920 for inducing the user to input biometric information (for example, fingerprint) on the display. For example, the element which generates the second UI element 920 may be the application 311, the host OS 313, the trusted OS 321, or applet 2 323b, but there is no limitation. The processor 120 may receive fingerprint information from a fingerprint sensor (for example, the sensor 340 of FIG. 3) located below the second UI element 920 and compare the same with pre-stored fingerprint information. The processor 120 may display a third UI element 930 (for example, a progress bar) for allowing the user to recognize that the biometric authentication is being performed while the biometric authentication process is performed using the fingerprint information received from the fingerprint sensor.

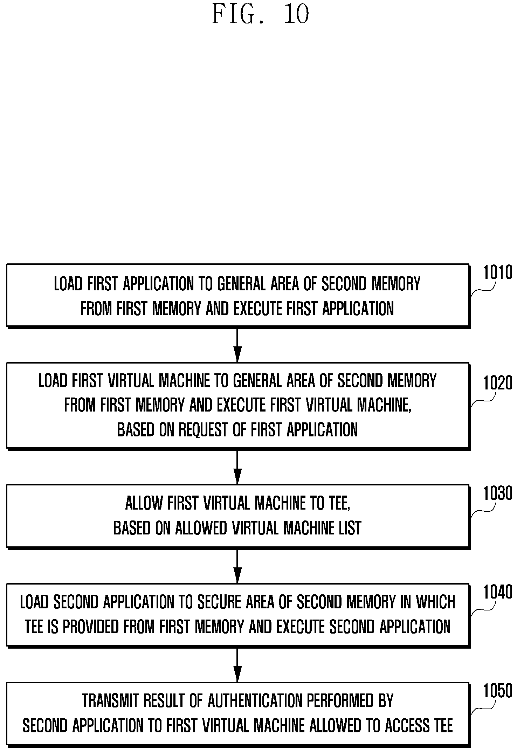

FIG. 10 is a flowchart illustrating operations in which the electronic device safely protects biometric information required for the biometric authentication according to an embodiment.

In operation 1010, the processor 120 may load a first application (for example, the application 311 of FIG. 3) to a general area of a second memory (for example, the general area 373 of the volatile memory 370 of FIG. 3) provided by the non-TEE 310 from a first memory (for example, the nonvolatile memory 360 of FIG. 3) and execute the first application.

In operation 1020, the processor 120 may load a first virtual machine (for example, VM 1 312a of FIG. 3) to the general area of the second memory from the first memory and execute the first virtual machine on the basis of a request for the biometric authentication from the first application.

In operation 1030, the processor 120 may allow the first virtual machine to access the TEE 320 on the basis of the allowed virtual machine list 380. For example, as the first application makes a request for the biometric authentication, the processor 120 may load the allowed virtual machine list 380 to a secure area of the second memory (for example, the secure area 371 of the volatile memory 370 of FIG. 3) from the first memory. The processor 120 may identify that the first virtual machine has a right to access the trusted execution environment 320 in the allowed virtual machine list 380.

In operation 1040, the processor 120 may load a second application (for example, applet 2 323b of FIG. 3) which can access a biometric sensor (for example, the sensor 340 of FIG. 3) to the secure area of the second memory provided by the TEE 320 from the first memory and execute the second application. According to execution of the second application, the biometric information (for example, the second biometric information of FIG. 5) may be acquired from the biometric sensor and temporarily stored in the secure area. In addition, the second application may compare the second biometric information acquired from the biometric sensor with the first biometric information stored in the secure area of the second memory and generate the authentication result indicating whether the second biometric information is valid on the basis of the comparison result.

In operation 1050, the processor 120 may transmit the result of the authentication performed by the second application to the first virtual machine allowed to access the TEE 320. Accordingly, the first virtual machine may transmit the authentication result to the first application. In addition, the processor 120 may transmit biometric information acquired from the biometric sensor to the first virtual machine along with the authentication result. Therefore, the first virtual machine may perform a re-identification operation of determining whether the authentication result of the second application is accurate by using the biometric information acquired from the biometric sensor.

In various embodiments, an electronic device (for example, the electronic device 300 of FIG. 3) may include a biometric sensor (for example, the sensor 340 of FIG. 3), a processor (for example, the processor included in the hardware 302 of FIG. 3) connected to the biometric sensor, a first memory (for example, the nonvolatile memory 360 of FIG. 3) connected to the processor and configured to store a first virtual machine (for example, the first virtual machine 312a of FIG. 3) including a first application, a second application which can access the biometric sensor, and a biometric authentication application for performing a biometric authentication using biometric information acquired by the second application, and a second memory (for example, the volatile memory 370 of FIG. 3) connected to the processor and divided into a general area providing a general execution environment (for example, the non-TEE 310 of FIG. 3) and a secure area providing a trusted execution environment (for example, the TEE 320 of FIG. 3) in which access by software executed in the general execution environment can be controlled. The second memory may store instructions causing the processor to, when executed by the processor, load the first application (for example, the application 311 of FIG. 3) to the general area from the first memory and execute the first application, load the first virtual machine to the general area from the first memory and execute the first virtual machine in response to a request for the biometric authentication of the first application, allow the first virtual machine to access the trusted execution environment, based on a predetermined allowed virtual machine list, load the second application (for example, applet 1 323a of FIG. 3) to the secure area from the first memory and execute the second application, so as to acquire biometric information from the biometric sensor and perform the biometric authentication by using the acquired biometric information, and transmit a result of the biometric authentication performed by the second application to the first application through the first virtual machine allowed to access the trusted execution screen.

The first virtual machine may be configured to receive biometric information from the second application and verify the result of the biometric authentication performed by the second application by using the received biometric information.

The instructions may cause the processor to provide first biometric information stored in the second memory to the second application through the first virtual machine. The second application may be configured to compare the first biometric information with second biometric information acquired from the biometric sensor and generate an authentication result indicating whether the acquired biometric information is valid based on a comparison result.

The instructions may cause the processor to load a first virtual machine manager (for example, the first VM manager 314 of FIG. 3) configured to manage access of the first virtual machine to the trusted execution environment to the general area from the first memory. The first virtual machine manager may be configured to determine whether to allow the first virtual machine to access the trusted execution environment, based on the allowed virtual machine list.

The first virtual machine manager may be configured to perform an operation of determining whether to allow the first virtual machine to access the second application executed in the trusted execution environment, based on the allowed virtual machine list.

The instructions may cause the processor to load a second virtual machine manager (for example, the second VM manager 322 of FIG. 3) configured to manage access of the first virtual machine to the trusted execution screen to the secure area from the first memory. The second virtual machine manager may be configured to perform an operation of determining whether to allow the first virtual machine to access the trusted execution environment, based on the allowed virtual machine list.

The second virtual machine manager may be configured to perform an operation of determining whether to allow the first virtual machine to access the second application executed in the trusted execution environment, based on the allowed virtual machine list.

The electronic device may further include security hardware operatively connected to the trusted execution environment, and the security hardware may be configured to manage access of the second application to the biometric sensor.

The security hardware may be configured to receive a request for accessing the biometric sensor from the second application and allow the request for accessing with reference to a predetermined allowed application list.

The instructions may cause the processor to configure a first secure address area as an address area which the biometric sensor can access in the secure area, configure a second secure address area as an address area which the first virtual machine can access in the secure area, configure a first relation between a third secure address area and the first secure address area, and configure a second relation between the third secure address area and the second secure address area. The biometric sensor may be configured to write data in the third secure address area through the first relation. The first virtual machine may be configured to read data from the third secure address area through the second relation.

The instructions may cause the processor to load a first virtual machine manager configured to manage access of the first virtual machine to the trusted execution environment to the general area from the first memory. The first virtual machine manager may be configured to identify a basic authentication as a preceding condition, which should be performed before the biometric authentication, from information indicating the preceding condition, make a request for the basic authentication to the trusted execution environment, and identify that the basic authentication is successful from the trusted execution environment, and make a request for the biometric authentication to the first virtual machine as the basic authentication is successful.

The instructions may cause the processor load a second virtual machine operatively connected to the first application to the general area from the first memory and execute the second virtual machine, establish a channel through which an authentication result processed by the first virtual machine is transmitted to the second virtual machine, and transmit the authentication result to the second virtual machine through the channel.

The instructions may cause the processor to include an application executed in the trusted execution environment and configured to sign and/or encrypt data in the channel.

The electronic device may further include security hardware (for example, the security hardware 350 of FIG. 3) operatively connected to the trusted execution environment and configured to store the authentication result processed by the first virtual machine, and the instructions may cause the processor to include the security hardware in the channel.

The instructions may cause the processor to display a graphic element for making a user recognize that the biometric authentication is being performed on a display of the electronic device while the biometric authentication is performed by the first virtual machine.

In various embodiments, a method of operating an electronic device (for example, the electronic device 300 of FIG. 3) may include an operation of loading a first application (for example, the application 311 of FIG. 3) to a general area (for example, the general area 373 of FIG. 3) of a second memory providing a general execution environment from a first memory (for example, the nonvolatile memory 360 of FIG. 3) of the electronic device and executing the first application by a processor of the electronic device, an operation of loading a first virtual machine (for example, the first virtual machine 312a of FIG. 3) performing a biometric authentication to the general area from the first memory and executing the first virtual machine, based on a request for the biometric authentication of the first application, an operation of allowing the first virtual machine to access a trusted execution environment in which access by software executed in the general execution environment can be controlled, based on a predetermined allowed virtual machine list, an operation of loading a second application (for example, applet 1 323a of FIG. 3) which can access a biometric sensor of the electronic device to a secure area (for example, the secure area 371 of FIG. 3) of the second memory providing the trusted execution environment from the first memory and executing the second application, so as to acquire biometric information from the biometric sensor and perform the biometric authentication using the acquired biometric information by the second application, and an operation of transmitting a result of the biometric authentication performed by the second application to the first application through the first virtual machine allowed to access the trusted execution environment.

Various embodiments may provide a recording medium storing instructions that can be read by a processor of an electronic device (for example, the electronic device 300 of FIG. 3). The instructions may cause the processor to, when executed by the processor, load a first application (for example, the application 311 of FIG. 3) to a general area of a second memory providing a general execution environment from a first memory (for example, the nonvolatile memory 360 of FIG. 3) of the electronic device and execute the first application, load a first virtual machine (for example, the first virtual machine 312a of FIG. 3) performing a biometric authentication to the general area from the first memory and execute the first virtual machine, based on a request for the biometric authentication of the first application, allow the first virtual machine to access a trusted execution environment in which access by software executed in the general execution environment can be controlled, based on a predetermined allowed virtual machine list, load a second application which can access a biometric sensor of the electronic device to a secure area (for example, the secure area 371 of FIG. 3) of the second memory providing the trusted execution environment from the first memory and execute the second application, so as to acquire biometric information from the biometric sensor and perform the biometric authentication using the acquired biometric information by the second application, and transmit a result of the biometric authentication performed by the second application to the first application through the first virtual machine allowed to access the trusted execution environment.

Embodiments disclosed in this specification and drawings are only specific examples to easily describe the technical content according to the embodiments of the disclosure and assist understanding of the embodiments of the disclosure. The invention is defined only by the scope of the appended claims.

## Claims

1. An electronic device (300) comprising:
a biometric sensor (340);
a processor (120) connected to the biometric sensor (340);
a first memory (360) connected to the processor (120) and configured to store a first virtual machine (312a), a first application (311), and a second application (323a) which can access the biometric sensor (340); and
a second memory (370) connected to the processor (120) and divided into a general area (373) providing a general execution environment and a secure area (371) providing a trusted execution environment in which access by software executed in the general execution environment can be controlled,
wherein the second memory (370) stores instructions causing the processor (120) to, when executed by the processor (120),
load the first application (323a) to the general area (373) from the first memory (360) and execute the first application (323a),
load the first virtual machine (312a) to the general area (373) from the first memory (360) and execute the first virtual machine (312a) in response to a request for the biometric authentication of the first application, the first virtual machine (312a) being allowed to access the trusted execution environment based on a predetermined allowed virtual machine list (380),
load the second application (323a) to the secure area (371) from the first memory (360) and execute the second application (323a) to acquire biometric information from the biometric sensor (340) and perform the biometric authentication by using the acquired biometric information, and
transmit, using the first virtual machine (312a), a result of the biometric authentication performed by the second application (323b) to the first application (323a).

2. The electronic device (300) of claim 1,
wherein the first virtual machine (312a) comprises a biometric authentication application for performing a biometric authentication using biometric information acquired by the second application (323a), and
wherein the first virtual machine (312a) is configured to receive biometric information from the second application (323a) and verify the result of the biometric authentication performed by the second application (323a) by using the received biometric information.

3. The electronic device (300) of claim 1, wherein the instructions cause the processor (120) to provide, using the first virtual machine (312a), first biometric information stored in the second memory (370) to the second application (323a), and the second application (323a) is configured to compare the first biometric information with second biometric information acquired from the biometric sensor (340) and generate an authentication result indicating whether the acquired biometric information is valid based on a comparison result.

4. The electronic device (300) of claim 1, wherein the instructions cause the processor (120) to:
load a first virtual machine manager (314) configured to manage access of the first virtual machine (312a) to the trusted execution environment to the general area (373) from the first memory (360); and
wherein the first virtual machine manager (314) is configured to determine whether to allow the first virtual machine (312a) to access the trusted execution environment, based on the allowed virtual machine list (380).

5. The electronic device (300) of claim 4, wherein the first virtual machine manager (314) is configured to perform an operation of determining whether to allow the first virtual machine (312a) to access the second application (323a) executed in the trusted execution environment, based on the allowed virtual machine list (380).

6. The electronic device (300) of claim 1, wherein the instructions cause the processor (120) to load a second virtual machine manager (322) configured to manage access of the first virtual machine (312a) to the trusted execution screen to the secure area (371) from the first memory (360), and the second virtual machine manager (322) is configured to perform an operation of determining whether to allow the first virtual machine (312a) to access the trusted execution environment, based on the allowed virtual machine list (380).

7. The electronic device (300) of claim 6, wherein the second virtual machine manager (322) is configured to perform an operation of determining whether to allow the first virtual machine (312a) to access the second application (323b) executed in the trusted execution environment, based on the allowed virtual machine list (380).

8. The electronic device (300) of claim 1, further comprising security hardware (350) operatively connected to the trusted execution environment, wherein the security hardware (350) is configured to:
manage access of the second application (323a) to the biometric sensor (340),
receive a request for accessing the biometric sensor (340) from the second application (323a) and
allow the request for accessing with reference to a predetermined allowed application list (381).

9. The electronic device (300) of claim 1, wherein the instructions cause the processor (120) to configure a first secure address area (441) as an address area which the biometric sensor (340) can access in the secure area (371), configure a second secure address area (442) as an address area which the first virtual machine (312a) can access in the secure area (371), configure a first relation between a third secure address area (443) and the first secure address area (441), and configure a second relation between the third secure address area (443) and the second secure address area (442), the biometric sensor (340) is configured to write data in the third secure address area (443) through the first relation, and the first virtual machine (312a) is configured to read data from the third secure address area (443) through the second relation.

10. The electronic device (300) of claim 1, wherein the instructions cause the processor (120) to load a first virtual machine manager (314) configured to manage access of the first virtual machine (312a) to the trusted execution environment to the general area (373) from the first memory (360), and the first virtual machine manager (314) is configured to identify a basic authentication as a preceding condition, which should be performed before the biometric authentication, from information indicating the preceding condition, make a request for the basic authentication to the trusted execution environment, and identify that the basic authentication is successful from the trusted execution environment, and make a request for the biometric authentication to the first virtual machine (312a) as the basic authentication is successful.

11. The electronic device (300) of claim 1, wherein the instructions cause the processor (120) to load a second virtual machine (312b) operatively connected to the first application (311) to the general area (373) from the first memory (360) and execute the second virtual machine (312b), establish a channel through which an authentication result processed by the first virtual machine (312a) is transmitted to the second virtual machine (312b), and transmit the authentication result to the second virtual machine (312b) through the channel.

12. The electronic device (300) of claim 11, wherein the instructions cause the processor (120) to include an application executed in the trusted execution environment and configured to sign and/or encrypt data in the channel.

13. The electronic device (300) of claim 11, further comprising security hardware (350) operatively connected to the trusted execution environment and configured to store the authentication result processed by the first virtual machine (312a), wherein the instructions cause the processor (120) to include the security hardware (350) in the channel.

14. The electronic device (300) of claim 1, wherein the instructions cause the processor (120) to display a graphic element for making a user recognize that the biometric authentication is being performed on a display of the electronic device (300) while the biometric authentication is performed by the first virtual machine (312a).

15. A method of operating an electronic device (300), the method comprising:
loading a first application (311) to a general area (373) of a second memory (370) providing a general execution environment from a first memory (360) of the electronic device (300) and executing the first application (311) by a processor (120) of the electronic device (300);
loading a first virtual machine (312a) performing a biometric authentication to the general area (373) from the first memory (360) and executing the first virtual machine (312a) based on a request for the biometric authentication of the first application, the first virtual machine (312a) being allowed to access a trusted execution environment in which access by software (301) executed in the general execution environment can be controlled, based on a predetermined allowed virtual machine list (380);
loading a second application (323b) which can access a biometric sensor (340) of the electronic device (300) to a secure area (371) of the second memory (370) providing the trusted execution environment from the first memory (360) and executing the second application (323a) to acquire biometric information from the biometric sensor (340) and perform the biometric authentication using the acquired biometric information by the second application (323b); and
transmitting, using the first virtual machine (312a), a result of the biometric authentication performed by the second application (323b) to the first application (323a).

## Patentansprüche

1. Elektronische Vorrichtung (300), umfassend:
einen biometrischen Sensor (340);
einen mit dem biometrischen Sensor (340) verbundenen Prozessor (120);
einen mit dem Prozessor (120) verbundenen ersten Speicher (360), der dazu konfiguriert ist, eine erste virtuelle Maschine (312a), eine erste Anwendung (311) und eine zweite Anwendung (323a) zu speichern, die auf den biometrischen Sensor (340) zugreifen können; und
einen zweiten Speicher (370), der mit dem Prozessor (120) verbunden und in einen allgemeinen Bereich (373), der eine allgemeine Ausführungsumgebung bereitstellt, und einen sicheren Bereich (371) unterteilt ist, der eine vertrauenswürdige Ausführungsumgebung bereitstellt, in der der Zugriff durch Software, die in der allgemeinen Ausführungsumgebung ausgeführt wird, gesteuert werden kann,
wobei in dem zweiten Speicher (370) Befehle gespeichert sind, die bei Ausführung durch den Prozessor (120) den Prozessor (120) dazu veranlassen,
die erste Anwendung (323a) aus dem ersten Speicher (360) in den allgemeinen Bereich (373) zu laden und die erste Anwendung (323a) auszuführen,
die erste virtuelle Maschine (312a) aus dem ersten Speicher (360) in den allgemeinen Bereich (373) zu laden und die erste virtuelle Maschine (312a) als Reaktion auf eine Anforderung zur biometrischen Authentifizierung der ersten Anwendung auszuführen, wobei der ersten virtuellen Maschine (312a) der Zugriff auf die vertrauenswürdige Ausführungsumgebung auf der Grundlage einer vorbestimmten Liste zulässiger virtueller Maschinen (380) gestattet wird,
die zweite Anwendung (323a) aus dem ersten Speicher (360) in den sicheren Bereich (371) zu laden und die zweite Anwendung (323a) auszuführen, um biometrische Informationen vom biometrischen Sensor (340) zu ermitteln und die biometrische Authentifizierung unter Verwendung der ermittelten biometrischen Informationen durchzuführen, und
unter Verwendung der ersten virtuellen Maschine (312a) ein Ergebnis der von der zweiten Anwendung (323b) durchgeführten biometrischen Authentifizierung an die erste Anwendung (323a) zu übertragen.

2. Elektronische Vorrichtung (300) nach Anspruch 1,
wobei die erste virtuelle Maschine (312a) eine biometrische Authentifizierungsanwendung zum Durchführen einer biometrischen Authentifizierung unter Verwendung der von der zweiten Anwendung (323a) ermittelten biometrischen Informationen umfasst, und
wobei die erste virtuelle Maschine (312a) dazu konfiguriert ist, biometrische Informationen von der zweiten Anwendung (323a) zu empfangen und das Ergebnis der von der zweiten Anwendung (323a) durchgeführten biometrischen Authentifizierung unter Verwendung der empfangenen biometrischen Informationen zu überprüfen.

3. Elektronische Vorrichtung (300) nach Anspruch 1, wobei die Befehle den Prozessor (120) dazu veranlassen, unter Verwendung der ersten virtuellen Maschine (312a) erste biometrische Informationen, die im zweiten Speicher (370) gespeichert sind, an die zweite Anwendung (323a) bereitzustellen, und die zweite Anwendung (323a) dazu konfiguriert ist, die ersten biometrischen Informationen mit vom biometrischen Sensor (340) ermittelten zweiten biometrischen Informationen zu vergleichen und auf der Grundlage eines Vergleichsergebnisses ein Authentifizierungsergebnis zu erzeugen, das angibt, ob die ermittelten biometrischen Informationen gültig sind.

4. Elektronische Vorrichtung (300) nach Anspruch 1, wobei die Befehle den Prozessor (120) dazu veranlassen:
einen ersten Virtuellen Maschinenmanager (314), der zum Verwalten des Zugriffs der ersten virtuellen Maschine (312a) auf die vertrauenswürdige Ausführungsumgebung konfiguriert ist, aus dem ersten Speicher (360) in den allgemeinen Bereich (373) zu laden; und
wobei der erste virtuelle Maschinenmanager (314) dazu konfiguriert ist, auf der Grundlage der Liste zulässiger virtueller Maschinen (380) festzustellen, ob der ersten virtuellen Maschine (312a) der Zugriff auf die vertrauenswürdige Ausführungsumgebung gestattet werden soll.

5. Elektronische Vorrichtung (300) nach Anspruch 4, wobei der erste virtuelle Maschinenmanager (314) dazu konfiguriert ist, einen Vorgang durchzuführen, bei dem auf der Grundlage der Liste zulässiger virtueller Maschinen (380) festgestellt wird, ob der ersten virtuellen Maschine (312a) der Zugriff auf die zweite Anwendung (323a), die in der vertrauenswürdigen Ausführungsumgebung ausgeführt wird, gestattet werden soll.

6. Elektronische Vorrichtung (300) nach Anspruch 1, wobei die Befehle den Prozessor (120) dazu veranlassen, einen zweiten virtuellen Maschinenmanager (322), der zum Verwalten des Zugriffs der ersten virtuellen Maschine (312a) auf den vertrauenswürdigen Ausführungsbildschirm konfiguriert ist, aus dem ersten Speicher (360) in den sicheren Bereich (371) zu laden, und der zweite virtuelle Maschinenmanager (322) dazu konfiguriert ist, einen Vorgang durchzuführen, bei dem auf der Grundlage der Liste zulässiger virtueller Maschinen (380) festgestellt wird, ob der ersten virtuellen Maschine (312a) der Zugriff auf die vertrauenswürdige Ausführungsumgebung gestattet werden soll.

7. Elektronische Vorrichtung (300) nach Anspruch 6, wobei der zweite virtuelle Maschinenmanager (322) dazu konfiguriert ist, einen Vorgang durchzuführen, bei dem auf der Grundlage der Liste zulässiger virtueller Maschinen (380) festgestellt wird, ob der ersten virtuellen Maschine (312a) der Zugriff auf die zweite Anwendung (323b), die in der vertrauenswürdigen Ausführungsumgebung ausgeführt wird, gestattet werden soll.

8. Elektronische Vorrichtung (300) nach Anspruch 1, umfassend ferner eine Sicherheitshardware (350), die funktionsfähig mit der vertrauenswürdigen Ausführungsumgebung verbunden ist, wobei die Sicherheitshardware (350) dazu konfiguriert ist:
den Zugriff der zweiten Anwendung (323a) auf den biometrischen Sensor (340) zu verwalten,
eine Zugriffsanforderung auf den biometrischen Sensor (340) von der zweiten Anwendung (323a) zu empfangen und
die Zugriffsanforderung unter Bezugnahme auf eine vorbestimmte Liste zulässiger Anwendungen (381) zuzulassen.

9. Elektronische Vorrichtung (300) nach Anspruch 1, wobei die Befehle den Prozessor (120) dazu veranlassen, einen ersten sicheren Adressbereich (441) als Adressbereich zu konfigurieren, auf den der biometrische Sensor (340) im sicheren Bereich (371) zugreifen kann, einen zweiten sicheren Adressbereich (442) als Adressbereich zu konfigurieren, auf den die erste virtuelle Maschine (312a) im sicheren Bereich (371) zugreifen kann, eine erste Beziehung zwischen einem dritten sicheren Adressbereich (443) und dem ersten sicheren Adressbereich (441) zu konfigurieren und eine zweite Beziehung zwischen dem dritten sicheren Adressbereich (443) und dem zweiten sicheren Adressbereich (442) zu konfigurieren, wobei der biometrische Sensor (340) dazu konfiguriert ist, über die erste Beziehung Daten in den dritten sicheren Adressbereich (443) zu schreiben, und die erste virtuelle Maschine (312a) dazu konfiguriert ist, über die zweite Beziehung Daten aus dem dritten sicheren Adressbereich (443) zu lesen.

10. Elektronische Vorrichtung (300) nach Anspruch 1, wobei die Befehle den Prozessor (120) dazu veranlassen, einen ersten virtuellen Maschinenmanager (314), der zum Verwalten des Zugriffs der ersten virtuellen Maschine (312a) auf die vertrauenswürdige Ausführungsumgebung konfiguriert ist, aus dem ersten Speicher (360) in den allgemeinen Bereich (373) zu laden, und der erste virtuelle Maschinenmanager (314) so konfiguriert ist, dass er anhand von Informationen, die eine Vorbedingung angeben, eine Basisauthentifizierung als die Vorbedingung identifiziert, die vor der biometrischen Authentifizierung durchgeführt werden sollte, eine Anfrage für die Basisauthentifizierung an die vertrauenswürdige Ausführungsumgebung stellt und anhand der vertrauenswürdigen Ausführungsumgebung identifiziert, dass die Basisauthentifizierung erfolgreich ist, und bei erfolgreicher Basisauthentifizierung eine Anfrage für die biometrische Authentifizierung an die erste virtuelle Maschine (312a) stellt.

11. Elektronische Vorrichtung (300) nach Anspruch 1, wobei die Befehle den Prozessor (120) dazu veranlassen, eine zweite virtuelle Maschine (312b), die funktionsmäßig mit der ersten Anwendung (311) verbunden ist, aus dem ersten Speicher (360) in den allgemeinen Bereich (373) zu laden und die zweite virtuelle Maschine (312b) auszuführen, einen Kanal einzurichten, über den ein von der ersten virtuellen Maschine (312a) verarbeitetes Authentifizierungsergebnis an die zweite virtuelle Maschine (312b) übertragen wird, und das Authentifizierungsergebnis über den Kanal an die zweite virtuelle Maschine (312b) zu übertragen.

12. Elektronische Vorrichtung (300) nach Anspruch 11, wobei die Befehle den Prozessor (120) dazu veranlassen, eine Anwendung einzubinden, die in der vertrauenswürdigen Ausführungsumgebung ausgeführt wird und dazu konfiguriert ist, Daten im Kanal zu signieren und/oder zu verschlüsseln.

13. Elektronische Vorrichtung (300) nach Anspruch 11, umfassend ferner eine Sicherheitshardware (350), die funktionsfähig mit der vertrauenswürdigen Ausführungsumgebung verbunden und dazu konfiguriert ist, das von der ersten virtuellen Maschine (312a) verarbeitete Authentifizierungsergebnis zu speichern, wobei die Befehle den Prozessor (120) dazu veranlassen, die Sicherheitshardware (350) in den Kanal einzubinden.

14. Elektronische Vorrichtung (300) nach Anspruch 1, wobei die Befehle den Prozessor (120) dazu veranlassen, auf einer Anzeige der elektronischen Vorrichtung (300) ein grafisches Element anzuzeigen, um einem Benutzer zu verdeutlichen, dass die biometrische Authentifizierung durchgeführt wird, während die biometrische Authentifizierung von der ersten virtuellen Maschine (312a) durchgeführt wird.

15. Verfahren zum Betreiben einer elektronischen Vorrichtung (300), wobei das Verfahren Folgendes umfasst:
Laden einer ersten Anwendung (311) aus einem ersten Speicher (360) der elektronischen Vorrichtung (300) in einen allgemeinen Bereich (373) eines zweiten Speichers (370), der eine allgemeine Ausführungsumgebung bereitstellt, und Ausführen der ersten Anwendung (311) durch einen Prozessor (120) der elektronischen Vorrichtung (300);
Laden einer ersten virtuellen Maschine (312a), die eine biometrische Authentifizierung durchführt, aus dem ersten Speicher (360) in den allgemeinen Bereich (373) und Ausführen der ersten virtuellen Maschine (312a) auf der Grundlage einer Anforderung zur biometrischen Authentifizierung der ersten Anwendung, wobei der ersten virtuellen Maschine (312a) auf der Grundlage einer vorbestimmten Liste zulässiger virtueller Maschinen (380) der Zugriff auf eine vertrauenswürdige Ausführungsumgebung gestattet wird, in der der Zugriff durch Software (301), die in der allgemeinen Ausführungsumgebung ausgeführt wird, gesteuert werden kann;
Laden einer zweiten Anwendung (323b), die auf einen biometrischen Sensor (340) der elektronischen Vorrichtung (300) zugreifen kann, aus dem ersten Speicher (360) in einen sicheren Bereich (371) des zweiten Speichers (370), der die vertrauenswürdige Ausführungsumgebung bereitstellt, und Ausführen der zweiten Anwendung (323a), um biometrische Informationen vom biometrischen Sensor (340) zu ermitteln und die biometrische Authentifizierung unter Verwendung der ermittelten biometrischen Informationen durch die zweite Anwendung (323b) durchzuführen; und
Übertragen eines Ergebnisses der von der zweiten Anwendung (323b) durchgeführten biometrischen Authentifizierung unter Verwendung der ersten virtuellen Maschine (312a) an die erste Anwendung (323a).

## Revendications

1. Dispositif électronique (300) comprenant :
un capteur biométrique (340) ;
un processeur (120) connecté au capteur biométrique (340) ;
une première mémoire (360) connectée au processeur (120) et configurée pour stocker une première machine virtuelle (312a), une première application (311) et une seconde application (323a) qui peut accéder au capteur biométrique (340) ; et
une seconde mémoire (370) connectée au processeur (120) et divisée en une zone générale (373) fournissant un environnement d'exécution général et une zone sécurisée (371) fournissant un environnement d'exécution de confiance dans lequel un accès par un logiciel exécuté dans l'environnement d'exécution général peut être contrôlé,
dans lequel la seconde mémoire (370) stocke des instructions amenant le processeur (120), lorsqu'elles sont exécutées par le processeur (120), à :
charger la première application (323a) dans la zone générale (373) à partir de la première mémoire (360) et exécuter la première application (323a),
charger la première machine virtuelle (312a) dans la zone générale (373) à partir de la première mémoire (360) et exécuter la première machine virtuelle (312a) en réponse à une demande d'authentification biométrique de la première application, la première machine virtuelle (312a) étant autorisée à accéder à l'environnement d'exécution de confiance sur la base d'une liste prédéterminée de machines virtuelles autorisées (380),
charger la seconde application (323a) dans la zone sécurisée (371) à partir de la première mémoire (360) et exécuter la seconde application (323a) pour acquérir des informations biométriques à partir du capteur biométrique (340) et effectuer l'authentification biométrique en utilisant les informations biométriques acquises, et
transmettre, en utilisant la première machine virtuelle (312a), un résultat de l'authentification biométrique effectuée par la seconde application (323b) à la première application (323a).

2. Dispositif électronique (300) selon la revendication 1,
dans lequel la première machine virtuelle (312a) comprend une application d'authentification biométrique pour effectuer une authentification biométrique en utilisant des informations biométriques acquises par la seconde application (323a), et
dans lequel la première machine virtuelle (312a) est configurée pour recevoir des informations biométriques de la seconde application (323a) et vérifier le résultat de l'authentification biométrique effectuée par la seconde application (323a) en utilisant les informations biométriques reçues.

3. Dispositif électronique (300) selon la revendication 1, dans lequel les instructions amènent le processeur (120) à fournir, en utilisant la première machine virtuelle (312a), des premières informations biométriques stockées dans la seconde mémoire (370) à la seconde application (323a), et la seconde application (323a) est configurée pour comparer les premières informations biométriques à des secondes informations biométriques acquises à partir du capteur biométrique (340) et générer un résultat d'authentification indiquant si les informations biométriques acquises sont valides sur la base d'un résultat de comparaison.

4. Dispositif électronique (300) selon la revendication 1, dans lequel les instructions amènent le processeur (120) à :
charger un premier gestionnaire de machine virtuelle (314) configuré pour gérer l'accès de la première machine virtuelle (312a) à l'environnement d'exécution de confiance dans la zone générale (373) à partir de la première mémoire (360) ; et
dans lequel le premier gestionnaire de machine virtuelle (314) est configuré pour déterminer s'il faut autoriser la première machine virtuelle (312a) à accéder à l'environnement d'exécution de confiance, sur la base de la liste de machines virtuelles autorisées (380).

5. Dispositif électronique (300) selon la revendication 4, dans lequel le premier gestionnaire de machine virtuelle (314) est configuré pour effectuer une opération consistant à déterminer s'il faut autoriser la première machine virtuelle (312a) à accéder à la seconde application (323a) exécutée dans l'environnement d'exécution de confiance, sur la base de la liste de machines virtuelles autorisées (380).

6. Dispositif électronique (300) selon la revendication 1, dans lequel les instructions amènent le processeur (120) à charger un second gestionnaire de machine virtuelle (322) configuré pour gérer l'accès de la première machine virtuelle (312a) à l'écran d'exécution de confiance dans la zone sécurisée (371) à partir de la première mémoire (360), et le second gestionnaire de machine virtuelle (322) est configuré pour effectuer une opération consistant à déterminer s'il faut autoriser la première machine virtuelle (312a) à accéder à l'environnement d'exécution de confiance, sur la base de la liste de machines virtuelles autorisées (380).

7. Dispositif électronique (300) selon la revendication 6, dans lequel le second gestionnaire de machine virtuelle (322) est configuré pour effectuer une opération consistant à déterminer s'il faut autoriser la première machine virtuelle (312a) à accéder à la seconde application (323b) exécutée dans l'environnement d'exécution de confiance, sur la base de la liste de machines virtuelles autorisées (380).

8. Dispositif électronique (300) selon la revendication 1, comprenant en outre un matériel de sécurité (350) connecté de manière opérationnelle à l'environnement d'exécution de confiance, dans lequel le matériel de sécurité (350) est configuré pour :
gérer l'accès de la seconde application (323a) au capteur biométrique (340),
recevoir une demande d'accès au capteur biométrique (340) provenant de la seconde application (323a) et
autoriser la demande d'accès en se référant à une liste prédéterminée d'applications autorisées (381).

9. Dispositif électronique (300) selon la revendication 1, dans lequel les instructions amènent le processeur (120) à configurer une première zone d'adresses sécurisée (441) en tant que zone d'adresses à laquelle le capteur biométrique (340) peut accéder dans la zone sécurisée (371), configurer une seconde zone d'adresses sécurisée (442) en tant que zone d'adresses à laquelle la première machine virtuelle (312a) peut accéder dans la zone sécurisée (371), configurer une première relation entre une troisième zone d'adresses sécurisée (443) et la première zone d'adresses sécurisée (441), et configurer une seconde relation entre la troisième zone d'adresses sécurisée (443) et la seconde zone d'adresses sécurisée (442), le capteur biométrique (340) étant configuré pour écrire des données dans la troisième zone d'adresses sécurisée (443) par l'intermédiaire de la première relation, et la première machine virtuelle (312a) étant configurée pour lire des données à partir de la troisième zone d'adresses sécurisée (443) par l'intermédiaire de la seconde relation.

10. Dispositif électronique (300) selon la revendication 1, dans lequel les instructions amènent le processeur (120) à charger un premier gestionnaire de machine virtuelle (314) configuré pour gérer l'accès de la première machine virtuelle (312a) à l'environnement d'exécution de confiance dans la zone générale (373) à partir de la première mémoire (360), et le premier gestionnaire de machine virtuelle (314) est configuré pour identifier une authentification de base en tant que condition préalable, qui doit être effectuée avant l'authentification biométrique, à partir d'informations indiquant la condition préalable, adresser une demande d'authentification de base à l'environnement d'exécution de confiance, et identifier que l'authentification de base a réussi à partir de l'environnement d'exécution de confiance, et adresser une demande d'authentification biométrique à la première machine virtuelle (312a) étant donné que l'authentification de base a réussi.

11. Dispositif électronique (300) selon la revendication 1, dans lequel les instructions amènent le processeur (120) à charger une seconde machine virtuelle (312b) connectée de manière opérationnelle à la première application (311) dans la zone générale (373) à partir de la première mémoire (360) et exécuter la seconde machine virtuelle (312b), établir un canal par lequel un résultat d'authentification traité par la première machine virtuelle (312a) est transmis à la seconde machine virtuelle (312b), et transmettre le résultat d'authentification à la seconde machine virtuelle (312b) par l'intermédiaire du canal.

12. Dispositif électronique (300) selon la revendication 11, dans lequel les instructions amènent le processeur (120) à inclure une application exécutée dans l'environnement d'exécution de confiance et configurée pour signer et/ou chiffrer des données dans le canal.

13. Dispositif électronique (300) selon la revendication 11, comprenant en outre un matériel de sécurité (350) connecté de manière opérationnelle à l'environnement d'exécution de confiance et configuré pour stocker le résultat d'authentification traité par la première machine virtuelle (312a), dans lequel les instructions amènent le processeur (120) à inclure le matériel de sécurité (350) dans le canal.

14. Dispositif électronique (300) selon la revendication 1, dans lequel les instructions amènent le processeur (120) à afficher un élément graphique pour amener un utilisateur à reconnaître que l'authentification biométrique est en cours d'exécution sur un affichage du dispositif électronique (300) pendant que l'authentification biométrique est effectuée par la première machine virtuelle (312a).

15. Procédé de fonctionnement d'un dispositif électronique (300), le procédé comprenant :
le chargement d'une première application (311) dans une zone générale (373) d'une seconde mémoire (370) fournissant un environnement d'exécution général à partir d'une première mémoire (360) du dispositif électronique (300) et l'exécution de la première application (311) par un processeur (120) du dispositif électronique (300) ;
le chargement d'une première machine virtuelle (312a) effectuant une authentification biométrique dans la zone générale (373) à partir de la première mémoire (360) et l'exécution de la première machine virtuelle (312a) sur la base d'une demande d'authentification biométrique de la première application, la première machine virtuelle (312a) étant autorisée à accéder à un environnement d'exécution de confiance dans lequel un accès par un logiciel (301) exécuté dans l'environnement d'exécution général peut être contrôlé, sur la base d'une liste prédéterminée de machines virtuelles autorisées (380) ;
le chargement d'une seconde application (323b) qui peut accéder à un capteur biométrique (340) du dispositif électronique (300) dans une zone sécurisée (371) de la seconde mémoire (370) fournissant l'environnement d'exécution de confiance à partir de la première mémoire (360) et l'exécution de la seconde application (323a) pour acquérir des informations biométriques à partir du capteur biométrique (340) et effectuer l'authentification biométrique en utilisant les informations biométriques acquises par la seconde application (323b) ; et
la transmission, en utilisant la première machine virtuelle (312a), d'un résultat de l'authentification biométrique effectuée par la seconde application (323b) à la première application (323a).
